# EUROPEAN PATENT APPLICATION

(11) **EP 4 629 564 A1**
(43) Date of publication of application: **08.10.2025**
(21) Application number: 25166577.4
(22) Date of filing: 27.03.2025
(51) Int. Cl.: H04L 9/40, G08G 5/26, H04L 9/08, H04L 67/12, H04L 9/00, H04L 9/30

(54) **SECURE COMMUNICATION FOR CONNECTED SYSTEMS USING POST QUANTUM CRYPTOGRAPHY**

(30) Priority: 04.04.2024 US 202418626862
(71) Applicant: HONEYWELL INTERNATIONAL INC., Charlotte, NC 28202 (US)
(72) Inventor: J, Kirupakar, Charlotte, 28202 (US); KHAN, Kalimulla, Charlotte, 28202 (US); RAJENDRAN, Ramkumar, Charlotte, 28202 (US); KOUTSOGIANNIS, Angelo John, Charlotte, 28202 (US)
(74) Representative: Haseltine Lake Kempner LLP

(57) **Abstract**

Embodiments of the present disclosure provide techniques for providing secure communication for connected systems. The techniques may include receiving a communication session indication associated with a first connected system; authenticating the first connected system based on IAM policy; encrypting a message to generate an encrypted message based on a post quantum cryptography public key associated with the first connected system; and causing transmitting of the encrypted message to a second connected system.

## Description

### TECHNOLOGICAL FIELD

The present disclosure relates, generally, to systems, apparatuses, methods, and computer program products for secure communication using post quantum cryptography. Example embodiments are directed to systems, apparatuses, method, and computer program products for establishing secure communication for connected systems.

### BACKGROUND

Various embodiments of the present disclosure address technical challenges related to secure communication for connected systems. Through applied effort, ingenuity, and innovation, Applicant has solved problems related to secure communication for connected systems by developing solutions embodied in the present disclosure, which are described in detail below.

### BRIEF SUMMARY

In general, embodiments of the present disclosure provide methods, apparatus, systems, computing devices, computing entities, and/or the like for secure communication for connected aircraft systems using post quantum cryptography. Other implementations for secure communication using post quantum cryptography will be, or will become, apparent to one with skill in the art upon examination of the following figures and detailed description. It is intended that all such additional implementations be included within this description be within the scope of the disclosure and be protected by the following claims.

In accordance with an aspect of the disclosure a computer-implemented method for providing secure communication for connected systems is provided. In an example embodiment, the computer-implemented method comprises receiving a communication session indication associated with a first connected system; authenticating the first connected system based on IAM policy; encrypting a message to generate an encrypted message based on a post quantum cryptography public key associated with the first connected system; and causing transmitting of the encrypted message to a second connected system.

In accordance with another aspect of the disclosure a computing system for providing secure communication for connected systems is provided. In an example embodiment, the computing system comprises memory and one or more processors communicatively coupled to the memory, the one or more processors configured to receive a communication session indication associated with a first connected system; authenticate the first connected system based on IAM policy; encrypt a message to generate an encrypted message based on a post quantum cryptography public key associated with the first connected system; and cause the encrypted message to be transmitted to a second connected system.

In accordance with yet another aspect of the disclosure one or more non-transitory computer-readable storage media for providing secure communication for connected systems is provided. In some embodiments, the one or more non-transitory computer-readable storage media includes instructions that, when executed by one or more processors, cause the one or more processors to: receive a communication session indication associated with a first connected system; authenticate the first connected system based on IAM policy; encrypt a message to generate an encrypted message based on a post quantum cryptography public key associated with the first connected system; and cause the encrypted message to be transmitted to a second connected system.

It should be appreciated that any and/or all aspects and/or operations of the example computer-implemented methods described herein may be combinable with any other of the aspects and/or operations of any other of the example computer-implemented methods described herein.

### BRIEF DESCRIPTION OF THE DRAWINGS

Having thus described the embodiments of the disclosure in general terms, reference now will be made to the accompanying drawings, which are not necessarily drawn to scale, and wherein:
FIG. 1A provides an example overview of an architecture in accordance with some embodiments of the present disclosure.
FIG. 1B provides an example connected ecosystem in which at least some embodiments of the present disclosure may operate.
FIG. 1C provides an example secure communication process flow for the example connected ecosystem of FIG 1B.
FIG. 2 provides an example apparatus in accordance with at least some embodiments of the present disclosure.
FIG. 3 provides an example client computing entity in accordance with some embodiments of the present disclosure.
FIG. 4 illustrates a signal diagram of a registering process in accordance with at least some embodiments of the present disclosure.
FIG. 5 illustrates a signal diagram for providing secure communication in accordance with at least some embodiments of the present disclosure.
FIG. 6 is a flowchart diagram of an example process for providing secure communication accordance with at least some embodiments of the present disclosure;

### DETAILED DESCRIPTION

Embodiments of the present disclosure now will be described more fully hereinafter with reference to the accompanying drawings, in which some, but not all, embodiments of the disclosure are shown. Indeed, embodiments of the present disclosure may be embodied in many different forms and should not be construed as limited to the embodiments set forth herein, rather, these embodiments are provided so that this disclosure will satisfy applicable legal requirements. The term "or" is used herein in both the alternative and conjunctive sense, unless otherwise indicated. The terms "illustrative" and "example" are used to be examples with no indication of quality level. Terms such as "computing," "determining," "generating," and/or similar words are used herein interchangeably to refer to the creation, modification, or identification of data. Further, "based on," "based on in part on," "based at least on," "based upon," and/or similar words are used herein interchangeably in an open-ended manner such that they do not indicate being based only on or based solely on the referenced element or elements unless so indicated. Like numbers refer to like elements throughout.

### Overview and Technical Improvements

Example embodiments disclosed herein address technical challenges associated with providing secure communication for connected systems within a connected ecosystem. Some example embodiments disclosed herein address technical challenges associated with establishing secure communication for connected aircraft systems including but not limited to aircraft to ground systems (e.g., aircraft communication addressing and reportion system (ACARS)) communication, communication involving connected flight management system (FMS), connected engines, connected APU, connected wheels and brakes, connected enhanced ground proximity warning system (EGPWS), or the like that may utilize IoT devices, data links, and/or the like for communication.

In the aviation domain, for example, within the FMS framework, the communication management function (CMF) plays a pivotal role in establishing aircraft-to-ground communications. In the present landscape of aerospace communication systems, VHF data-link messages are employed for transmitting crucial flight status updates, airport control directives, and sensitive information. However, the current aviation data-link communication lacks entity authentication. The airborne management unit (MU) may only verify CRC and flight registration numbers in uplink messages. These data-link messages are generally transmitted in plain text on public frequencies, rendering them susceptible to interception or tampering, potentially leading to the exposure of private data, unauthorized control, and hijacking.

Various types of attacks, including entity camouflage, man-in-the-middle, monitoring, and data forgery, are conceivable. For a monitoring attack, an assailant may intercept messages using radio or a PC with transcribing equipment to gather sensitive information like flight number, departure and destination airports. In an entity camouflage attack, an attacker could pose as a ground station and transmit unauthorized messages to the aircraft, causing disruptions in the airborne communication system and potentially manipulating the aircraft due to the absence of authentication between the flight and ground station.

The use of quantum computers, with their unfathomable computing power, is rapidly approaching reality. A computer based on the peculiar properties of quantum mechanics can perform calculations exponentially faster than a computer made of classical bits. Recent developments in quantum computing pose a threat to public key primitives due to quantum computers' ability to solve complex cryptographic problems in polynomial time. In next generation aeronautical telecommunications network (ATN) systems, for example, an attacker can use a quantum computer ecosystem such as Shor's algorithm, use a self-signed certificate and spoof receiver trusting it.

Accordingly, communication technologies such as, for example, aircraft communication technologies need a major change to have both security communication between connected systems (e.g., between a ground system and an Aircraft system) even with the advent of the quantum computing era.

Example embodiments in the present disclosure leverage cloud-based quantum service computing entity to provide post quantum cryptographic services, including post quantum keys (also referred to herein as quantum keys, PQC keys, post quantum cryptographic keys, or similar terms) via a quantum edge computing entity embodied by a gateway (also referred to herein as gateway system, gateway network entity, or similar terms used herein) such as an avionics IoT gateway, to enable secure communication between connected systems (e.g., between CMF system and ground systems, etc.). For example, gateway systems such as avionics IoT gateway system associated with a IOT device may embody a quantum edge computing entity and may be communicatively coupled to the cloud-based quantum service computing entity to run/execute IoT applications, data ingress and egress, data loading, quick access recorder (QAR) data extraction for flight efficiency and flight safety solutions, or the like. In some examples, the cloud-based quantum service computing entity may be embodied by a Forge cloud services platform. The cloud-based quantum service computing entity may be configured to perform one or more functionalities associated with establishing secure communication between connected systems as described herein including, but not limited to, generating quantum keys, storing quantum keys, distributing quantum keys, and/or other post quantum services.

In example embodiments, the quantum edge computing entity (e.g., embodied by a gateway) is configured to deploy a policy agent and/or key store that are integrated with backend services of the cloud-based quantum service computing entity. The policy agent may be configured to serve as an on-premises policy agent in the gateway and configured to receive from a connected system (e.g., FMS, etc.) queries for authorization, authentication, and/or cryptography operations. For example, the gateway system may be configured to host a cryptography agent (e.g. policy agent) that is configured to function as a client component for the cloud-based quantum service computing entity. In example embodiments, the cryptography agent (e.g. policy agent) is leveraged to authenticate the communication for each session established between connected systems such as, for example, between a CMF system and ground/ACARS system. In some embodiments, the gateway system may be configured to store the post quantum cryptographic keys and/or use the post quantum cryptographic keys as the broker to enable various cryptographic operations for connected systems (e.g., CMF system, etc. in aviation domain).

In example embodiments, as described below, the cryptographic services (e.g., components of the quantum edge computing entity) may be deployed in a non-certified application partition of the gateway. In example embodiments, a data access partition (e.g., avionics data access partition (ADAP), or the like) of the gateway may be configured to access the policy agent via one or more API's. Example embodiments, create (e.g., virtually) a pseudo identity and access management (IAM) layer in the gateway with the capabilities from the cloud-based quantum service computing entity to protect the communications channel. In example embodiments, a connected system, such as a CMF is configured to utilize a private key deployed in the gateway system to generate encrypted data (e.g., message, etc.) and transmit the encrypted data/message to one or more other connected systems. In example embodiments, the ground system may be configured to access the post quantum cryptographic keys to decrypt the encrypted data/message that is transmitted over the secure communication channel thus established.

Example applications of embodiments of the present disclosure in an aviation domain include, but not limited to, (i) encrypting ACARS communication between the aircraft CMF and ground control by using post quantum keys and post quantum cryptography services provided by the gateway (e.g., via a quantum edge computing entity thereof), which in turn mitigates against an attacker compromising the CMF via the gateway and taking over the ACARS channel; (ii) enabling high fidelity encrypted data broadcast by using the post quantum keys and post quantum cryptography services provided by the gateway (e.g., quantum edge computing entity thereof), to allow for secure sharing of trajectory 4D data (Aircraft Intent) to ground controllers who then schedule arrivals/landings at airports (e.g., next generation air traffic management relies on trajectory based operations (TBO) to optimize terminal air traffic and runway occupancy. In some example, TBO requires sharing of trajectory 4D data to the ground controllers who then schedule arrivals/landings at airports. The success of this initiative relies on the fidelity of the 4D data received and any compromise to this data can jeopardize the air traffic drastically); (iii) enabling weather data and source authentication to be encrypted by using post quantum keys and post quantum cryptography services provided by the gateway (e.g., quantum edge computing entity thereof), which prevents compromising weather information that can lead to catastrophic results when aircraft's get into bad weather conditions without preparation or mitigation (e.g., pilot's may receive live weather information from ground services like XM weather, IBM weather services etc. for situational awareness and to make tactical changes to the flight path to circumvent inclement weather, thus, compromised weather information can lead to catastrophic results when aircraft's get into bad weather conditions without preparation or mitigation; and (iv) encrypting and authenticating traffic data and source authentication by using the post quantum keys and post quantum cryptographic services provided by the gateway (e.g., quantum edge computing entity thereof), to prevent compromised traffic information that can lead to major incidents or accidents (e.g., pilot's may receive live traffic information from ground services like flight radar, flight aware etc. for situational awareness and to make tactical changes to the flight path to circumvent traffic congestion, thus, compromised traffic information can lead to major incidents or accidents.

By providing secure communication for connected system using the technique discussed herein, embodiments of the present disclosure improve various technology fields and systems including, but not limited to, communication systems and security systems.

### Definitions

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

### EXAMPLE SYSTEMS AND APPARATUSES OF THE DISCLOSURE

Embodiments of the present disclosure may be implemented in various ways, including as computer program products that comprise articles of manufacture, as hardware, including circuitry, configured to perform one or more functions, and/or as combinations of specific hardware and computer program products. Such computer program products may include one or more software components including, for example, software objects, methods, data structures, or the like. A software component may be coded in any of a variety of programming languages. An illustrative programming language may be a lower-level programming language such as an assembly language associated with a particular hardware architecture and/or operating system platform. A software component comprising assembly language instructions may require conversion into executable machine code by an assembler prior to execution by the hardware architecture and/or platform. Another example programming language may be a higher-level programming language that may be portable across multiple architectures. A software component comprising higher-level programming language instructions may require conversion to an intermediate representation by an interpreter or a compiler prior to execution.

Other examples of programming languages include, but are not limited to, a macro language, a shell or command language, a job control language, a script language, a database query, or search language, and/or a report writing language. In one or more example embodiments, a software component comprising instructions in one of the foregoing examples of programming languages may be executed directly by an operating system or other software component without having to be first transformed into another form. A software component may be stored as a file or other data storage construct. Software components of a similar type or functionally related may be stored together, such as in a particular directory, folder, or library. Software components may be static (e.g., pre-established, or fixed) or dynamic (e.g., created or modified at the time of execution).

A computer program product may include a non-transitory computer-readable storage medium storing applications, programs, program modules, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media include all computer-readable media (including volatile and non-volatile media).

In some embodiments, a non-volatile computer-readable storage medium may include a floppy disk, flexible disk, hard disk, solid-state storage (SSS) (e.g., a solid state drive (SSD), solid state card (SSC), solid state module (SSM), enterprise flash drive, magnetic tape, or any other non-transitory magnetic medium, and/or the like. A non-volatile computer-readable storage medium may also include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may also include read-only memory (ROM), programmable read-only memory (PROM), erasable programmable read-only memory (EPROM), electrically erasable programmable read-only memory (EEPROM), flash memory (e.g., Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may also include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

In some embodiments, a volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory (VRAM), cache memory (including various levels), flash memory, register memory, and/or the like. It will be appreciated that where embodiments are described to use a computer-readable storage medium, other types of computer-readable storage media may be substituted for or used in addition to the computer-readable storage media described above.

As should be appreciated, various embodiments of the present disclosure may also be implemented as one or more methods, apparatuses, systems, computing devices (e.g., connected systems, servers, etc.), computing entities, and/or the like. As such, embodiments of the present disclosure may take the form of an apparatus, system, computing device, computing entity, and/or the like executing instructions stored on one or more computer-readable storage mediums to perform certain steps or operations. Thus, embodiments of the present disclosure may also take the form of an entirely hardware embodiment, an entirely computer program product embodiment, and/or an embodiment that comprises combination of computer program products and hardware performing certain steps or operations.

Embodiments of the present disclosure are described below with reference to block diagrams and flowchart illustrations. Thus, it should be understood that each block of the block diagrams and flowchart illustrations may be implemented in the form of a computer program product, an entirely hardware embodiment, a combination of hardware and computer program products, and/or apparatuses, systems, computing devices, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments may produce specifically-configured machines performing the steps or operations specified in the block diagrams and flowchart illustrations. In embodiments in which specific hardware is described, it is understood that such specific hardware may work in conjunction with the foregoing according to the various examples described herein. Accordingly, the block diagrams and flowchart illustrations support various combinations of embodiments for performing the specified instructions, operations, or steps.

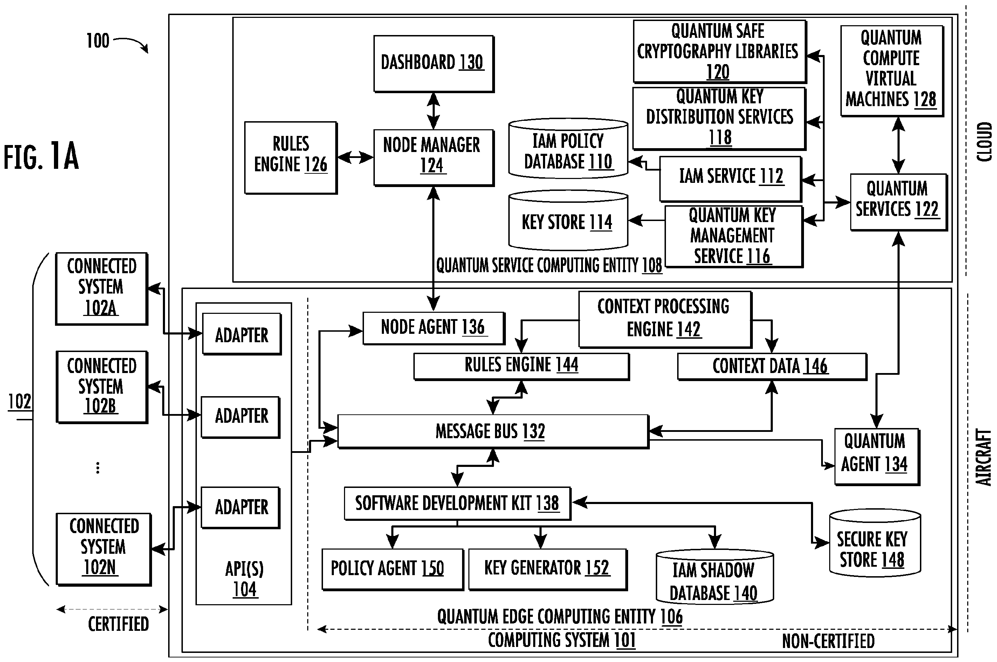

In this regard, FIG. 1A provides an example overview of an architecture 100 in accordance with some embodiments of the present disclosure. The depiction of the example architecture 100 is not intended to limit or otherwise confine the embodiments described and contemplated herein to any particular configuration of elements or systems, nor is it intended to exclude any alternative configurations or systems for the set of configurations and systems that can be used in connection with embodiments of the present disclosure. Rather, FIG. 1A and the architecture 100 disclosed therein is merely presented to provide an example basis and context for the facilitation of some of the features, aspects, and uses of the methods, apparatuses, computer readable media, and computer program products disclosed and contemplated herein. It will be understood that while many of the aspects and components presented in FIG.1A are shown as discrete, separate elements, other configurations may be used in connection with the methods, apparatuses, computer readable media, and computer programs described herein, including configurations that combine, omit, separate, and/or add aspects and/or components.

The architecture 100 includes a computing system 101 configured to facilitate secure communication for connected systems 102. In some embodiments, the computing system 101 may communicate with a connected system 102 using one or more communication networks. Examples of communication networks include any wired or wireless communication network including, for example, a wired or wireless local area network (LAN), personal area network (PAN), metropolitan area network (MAN), wide area network (WAN), or the like, as well as any hardware, software, and/or firmware required to implement it (such as, e.g., network routers, and/or the like). In some embodiments, the computing system 101 may communicate with a connected system 102 via one or more application programming interfaces 104 (APIs).

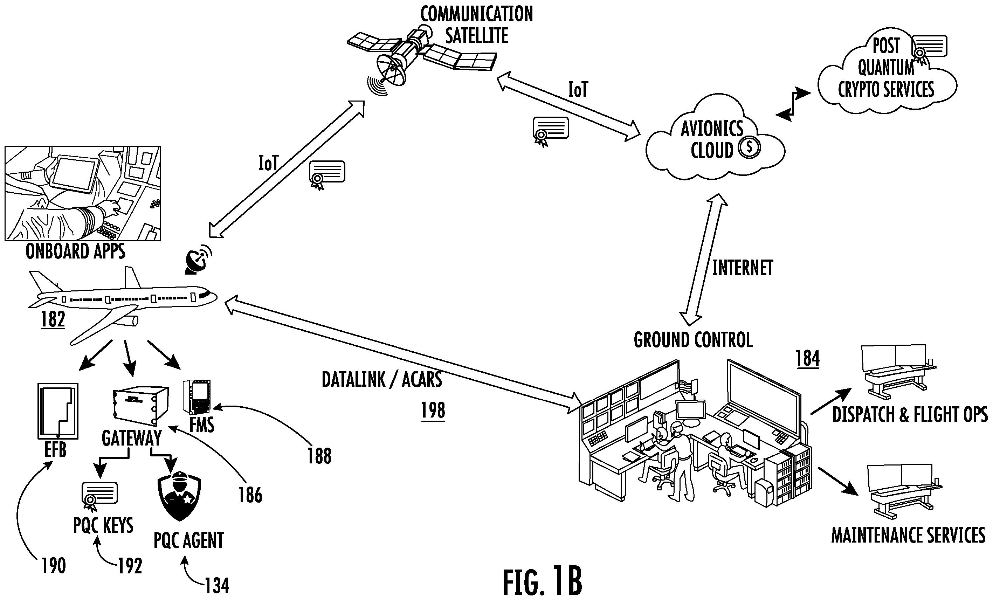

In some embodiments, connected systems 102 are systems configured to communicate with each other over the internet. For example, a first connected system 102A (e.g., transmitting connected system) may be configured to communicate a message to a second connected system 102B (e.g., recipient connected system) over the internet. In some embodiments, one or more communication systems may be leveraged by the connected systems 102 to communicate with each other. As an example, in an aviation domain, the communication system may comprise a data link system such as an aircraft communications addressing and reporting system (ACARS). As further described below with reference to FIG. 1B, the data link system be configured to facilitate communication between an aircraft and ground control and/or between the aircraft and other connected system in the aviation ecosystem and/or between the ground control and other connected systems in the aviation ecosystem and/or between other connected systems in the aviation ecosystem. For example, in aviation domain, at least one connected system 102 maybe onboard an aircraft. In aviation domain, example connected systems include or are associated with, but not limited to, connected flight management systems (connected FMS), connected engine, connected APU, connected radar, connected wheels and brakes, or the like. In some embodiments, a connected system 102 may include a client computing entity configured to perform various functions associated with the connected system.

It should be appreciated that while some example embodiments are described herein with reference to the aviation domain, the example architecture 100 may be used in a plurality of domains and not limited to any specific application as disclosed herewith. The plurality of domains may include aviation, banking, healthcare, industrial, manufacturing, education, retail, to name a few.

The computing system 101 may include a quantum edge computing entity 106 and a quantum service computing entity 108. In some embodiments, the quantum edge computing entity 106 may comprise a first subsystem of the computing system 101 and the quantum service computing entity 108 may comprise a second subsystem of the computing system 101. In some embodiments, the quantum edge computing entity 106 is embodied by or associated with a gateway network entity. For example, in the aviation domain, the quantum edge computing entity 106 may be embodied by or implemented in an avionics IoT gateway. In some embodiments, the avionics IoT gateway may include a certified portion and a non-certified portion. In some embodiments, the quantum edge computing entity 106 may be embodied by or implemented in the non-certified portion of the avionics IoT gateway. In some embodiments, a gateway network entity such as an avionics gateway is a configured to connect two networks. For example, a gateway network entity may be configured to connect connected systems of one network to another. In the aviation domain, for example, the gateway network entity (e.g., including the quantum edge computing entity 106 may be onboard an aircraft.

In some embodiments, the quantum service computing entity 108 is a cloud-based quantum service computing entity 108. For example, the quantum service computing entity 108 may be implemented in the cloud. In some embodiments, the quantum edge computing entity 106 and quantum service computing entity 108 are configured to communicate with each other using one or more wired and/or wireless communication techniques. The respective systems may be specially configured to perform one or more steps/operations of one or more techniques described herein. For example, the quantum service computing entity 108 may be configured to perform post quantum key management services including, but not limited to, generating post quantum cryptography keys, providing the post quantum cryptography keys to one or more connected systems 102 via a quantum edge computing entity 106. The quantum edge computing entity 106 may be configured to store post quantum cryptography keys for connected systems, use the post quantum cryptography keys as identity and access (IAM) agents for authentication and authorization. In some embodiments, the quantum edge computing entity 106 may leverage the post quantum cryptography keys to provide authentication and authorization between avionics components (e.g., communication satellite, avionics cloud, or the like). In some embodiments, the quantum edge computing entity 106 may be configured to facilitate and/or perform message encryption/encapsulation using post quantum cryptography keys to establish secure communication between connected systems 102 (e.g., a transmitting connected system 102A and recipient connected system 102B) via a communication network, channel, or system that may otherwise be unsecure. A transmitting connected system 102A may be a connected system 102 sending a message and a receiving connected system 102 may be a connected system receiving or intended to receive the message.

In some embodiments, the quantum service computing entity 108 includes one or more engines, services, databases and/or other components configured to facilitate and/or perform various functions associated with providing secure communication for connected systems 102 and/or within communication systems such as data link systems.

In some embodiments, the quantum service computing entity 108 includes an identity and access management policy database 110 (e.g., IAM Policy database as illustrated in FIG. 1A), an identity and access management service 112 (e.g., IAM Service as illustrated in FIG. 1A), a key store 114, a quantum key management service 116, a quantum key distribution services 118, quantum-safe cryptography libraries 120, quantum services 122, a node manager 124, a rules engine 126, quantum compute virtual machines 128, and/or one or more dashboards 130.

In some embodiments, the identity and access management policy database 110 may be configured to govern and organize the rules dictating user identification identities and privileges/permission within a connected ecosystem. In some embodiments, a connected ecosystem describes an environment and/or ecosystem comprising connected systems configured to communicate with each other over the internet, such as for example an aviation environment/ecosystem (e.g., connected aviation ecosystem) having a plurality of connected systems. The identity and access management policy database 110 may comprise a repository that stores quantum resistant, authentication and authorization policies configured to enhance the security of information/data exchange between connected systems 102 by effectively managing access and permissions for various entities operating within the ecosystem including, but not limited to connected systems, gateway network entities, and/or other entities configured to facilitate communication between connected systems. For example, the identity and access management policy database 110 may store for each of a plurality of entities in the connected ecosystem, the roles, updates, and/or other privileges for a respective entity.

In some embodiments, the identity and access management service 112 one or more of hardware, software, and/or firmware configured to, individually or collectively, control access to one or more other components of the architecture 100. For example, the identity and access management service 112 may be configured to define, store, retrieve, and/or update authentication and authorization policies in the identity and access management policy database 110. In this regard, the identity and access management service 112 may be configured to ensure that only authorized entities have access to quantum cryptographic keys and relevant processes.

In some embodiments, the key store 114 is a repository configured to securely store and manage post quantum cryptographic keys (e.g., using the principles of quantum mechanics). The key store 114 may leverage post quantum key distribution protocols to enable generation, storage, and retrieval of quantum cryptographic keys, with inherent resistance against eavesdropping or unauthorized access, which ensures a high level of security and key management for information (e.g., including sensitive information) shared between connected systems.

In some embodiments, the quantum key management service 116 includes one or more of hardware, software, and/or firmware configured to, individually or collectively, allocate/issue post quantum cryptographic keys, de-allocate post quantum cryptographic keys (e.g., rework post quantum cryptographic keys), and update post quantum cryptographic keys (e.g., update expired post quantum cryptographic keys). For example, the quantum key management service 116 may be a layer on top of the key store 114 and may be configured to facilitate secure generation and/or storage of post quantum cryptographic keys using principles of quantum mechanics. In this regard, the quantum key management service 116 may provide resilient key management processes that enhance the security of communication systems (e.g., data link systems, or the like) or otherwise the security of communication between connected systems by leveraging quantum principles to protect against eavesdropping and unauthorized access threats.

In some embodiments, the quantum key distribution services 118 includes one or more of hardware, software, and/or firmware configured to, individually or collectively, distribute post quantum cryptographic keys among various entities within a connected ecosystem (e.g., serve as a broker). For example, quantum cryptography key distribution protocols may be implemented via the quantum key distribution services 118 to ensure secure encryption, key generation, distribution, and management. Thus, providing enhanced cyber security within the connected ecosystem by mitigating the risks associated with classical eavesdropping techniques. For example, the quantum key distribution services 118 may leverage quantum principles for secure post quantum cryptography key exchange between connected systems 102 via a communication channel and/or communication system that may be otherwise unsecure.

In some embodiments, the quantum safe cryptographic libraries 120 may be configured to provide cryptographic, algorithms resistant to quantum computing threats. For example, the quantum safe cryptographic libraries 120 may be configured for performing quantum-level hashing. In this regard, the quantum-safe cryptographic libraries 120 may serve to fortify devices, systems, and/or other components within a connected ecosystem (e.g., avionics systems or the like) against potential security, vulnerabilities posed by quantum computers, thus, ensuring that encryption methods remain robust and secure even in the face of evolving quantum technology.

In some embodiments, the quantum services 122 may comprise one or more APIs configured to allow for communication between the quantum service computing entity 108 and the quantum edge computing entity 106. The quantum services 122 (e.g., Forge quantum services in some implementations) may be configured to provide advanced security solutions including functionalities such as quantum key distribution, secure communication protocols, and real-time analytics to safeguard sensitive information. For example, the quantum service 122 may leverage quantum cryptography principles.

In some embodiments, the node manager 124 includes one or more of hardware, software, and/or firmware configured to, individually or collectively oversee the deployment and coordination of quantum key distribution nodes within the connected ecosystem. For example, the node manager may be configured to facilitate and/or perform managing the generation, exchange, and/or storage of quantum keys (e.g., post quantum cryptography keys). Thus, ensuring secure communication and/or secure communication channels by implementing quantum-safe cryptographic protocols, thereby enhancing the overall cybersecurity of the connected systems in the connected ecosystem. In aviation domain, for example, the node manager 124 may be configured to manage flight devices and may leverage a rules engine 126.

In some embodiments, the rules engine 126 may be configured to collaborate with the node manager 124 to enforce and execute predefined policies governing the behavior and interactions of quantum key distribution nodes within the connected ecosystem. The rules engine 126 may be configured to serve as a dynamic control mechanism, facilitating the consistent implementation of security protocols and ensuring the coordinated operation of quantum cryptographic processes to enhance the overall integrity of the communications (e.g., avionic communications in an aviation domain).

In some embodiments, each of the services may run in a quantum sandbox (e.g., run using quantum computing ecosystem in the cloud environment. The quantum compute virtual machines 128 may be configured to provide secure data processing using quantum computing principles. In example embodiments, the quantum compute virtual machines 128 may be configured to create a controlled and isolated space, where quantum, cryptographic operations can be executed. In this regard, the quantum compute virtual machines 128 may be configured to enhance the security of various devices and/or systems within the connected ecosystem by leveraging the computational properties of quantum computing in a virtualized setting. For example, the quantum compute virtual machines 128 may comprise a virtualized environment, that employs quantum computing principles. In some embodiments, the dashboard 130 may be configured for rendering one or more graphical user interfaces.

In some embodiments, the quantum edge computing entity 106 includes one or more engines, services, databases, and/or other components (e.g., edge components) configured to facilitate and/or perform various functions associated with providing secure communication for connected systems 102 and/or within communication systems such as data link systems. In some embodiments, the quantum edge computing entity 106 includes a message bus 132, quantum agent 134, node agent 136, software development kit 138, identity and access management shadow database 140 (e.g., IAM Shadow database as illustrated in FIG. 1A), context processing engine 142, rules engine 144, context data 146, secure key store 148, policy agent 150, and/or key generator 152.

In some embodiments, the message bus 132 may be a centralized data bus implementing complex event processing runtime. One or more components embodied by or otherwise associated with the quantum edge computing entity 106 may utilize the message bus to exchange information with each other.

In some embodiments, the quantum agent 134 includes one or more of hardware, software, and/or firmware configured to, individually or collectively, manage client-side services associated with the quantum service computing entity 108. For example, the quantum agent 134 may be configured to manage and control quantum-related components and services versions that have been deployed in the quantum edge computing entity 106 runtime (e.g., gateway network entity runtime). The quantum agent 134 may be configured to communicate with the quantum service computing entity 108 (e.g., the quantum services 122 of the quantum service computing entity 108) to inject inputs related to the quantum services into the message bus 132.

In some embodiments, the node agent 136 includes one or more of hardware, software, and/or firmware configured to, individually or collectively, that is configured for registering, provisioning, de-registering, de-provisioning, initialization, blacklisting, and/or updating the quantum edge computing entity 106 runtime (e.g., gateway network entity runtime). For example, the node agent 136 may be configured for injecting hardware-related information (e.g., including gateway network entity-related information into the message bus 132). The node agent 136, for example, may serve as a device manager.

In some embodiments, the software development kit 138 may comprise the software runtime configured to enable development and deployment of various applications in the gateway network entity embodying the quantum edge computing entity 106 to implement multiple use cases associated with securing various external components (e.g., offboard components, etc.).

In some embodiments, the identity and access management shadow database 140 may comprise a local database leveraged for local authorization and authentication in case of absence of cloud services (e.g., in case of lack of internet on an aircraft, or the like). A copy of the authentication and authorization policies may be stored in the identity and access management shadow database 140 and leveraged for authentication and authorization in the absence of cloud services. The rules engine 144 and the context data 146 may be leveraged to make decisions.

In some embodiments, the context processing engine 142 includes one or more of hardware, software, and/or firmware configured to, individually or collectively, identify the current runtime context of the quantum edge computing entity 106. The output of the context processing engine 142 may comprise possible state or collection of states of the device or system under consideration. The context data 146 may comprise data defined by the context processing engine 142. Context data 146 may be input to one or more other components of the quantum edge computing entity 106 to, for example, get operational on the desired runtime conditions.

In some embodiments, the rules engine 144 includes one or more of hardware, software, and/or firmware configured to, individually or collectively, store and/or manage rule sets that have been received (e.g., downloaded, etc.) from the quantum service computing entity 108 and enable seamless operation of various components (e.g., in aviation, when the aircraft is in the air).

In some embodiments, the policy agent 150 includes one or more of hardware, software, and/or firmware configured to, individually or collectively, shadow the centralized policies that could be received (e.g., downloaded, etc.) from the computing system 101 environment (e.g., central server environment). In some embodiments, the key generator 152 includes one or more of hardware, software, and/or firmware configured to, individually or collectively, generate and/or retrieve the keys required for the quantum edge computing entity 106 runtime (e.g., gateway network entity runtime).

In some embodiments, the secure key store 114 may comprise a hardware backed repository configured to store offline keys and certificates which may be used for authentication and authorization of various software services at real-time when the aircraft is in the air.

In some embodiments, as further described below, the computing system 101 utilizes a lattice-based post quantum cryptographic technique, such as key encapsulation methodology to generate and transmit post quantum cryptography keys in order to provide secure communication between connected system 102. The key encapsulation methodology may be configured for transmitting a secret key over an unsecured communication channel, where the secret key is encapsulated in a layer of encryption before being transmitted to the intended recipient (e.g., receiving connected system) such that a secure communication is established.

FIG. 1B provides an example connected ecosystem in which at least some embodiments of the present disclosure may operate. Specifically, FIG. 1B illustrates an example connected aviation ecosystem. As shown in FIG. 1B the connected ecosystem includes a gateway 186 (e.g., gateway network entity), flight management system 188, and electronic flight bag (EFB) onboard an aircraft 182 configured to communicate with ground control system 184 via a data link communication channel 198 (e.g., ACARS). The flight management system 188 may include a communication management function (CMF) system leverage by the aircraft 182 to communicate with the ground control system 184. The gateway 186 may embody the quantum edge computing entity 106 comprising various components including quantum agent 134 (also referred to PQC agent, or crypto agent), key store 114, policy agent 150, etc. As described above, the key store 114 may be configured to store post quantum cryptography keys 192 and use the post quantum cryptography keys 192 as a broker to enable various cryptography operations for the CMF system. Using Epic-Lan TCP/IP connection and Edge-to-Edge connector CMF through Avionics Data Access Partition (e.g., ADAP), the policy agent may be accessed via API's. For each session (e.g., communication session) established by the CMF to Ground using ACARS, the quantum agent 134 may be used to authenticate the communication. For example, a pseudo IAM layer is virtually created in the gateway 186 (e.g., quantum edge computing entity 106 thereof) with the capabilities from the quantum service computing entity 108 deployed in the cloud and configured to provide post quantum cryptography services. cloud-based system (e.g., Forge Cloud) to protect the communication channels or otherwise secure the communication transmitted via the communication channels. The CMF may utilize a private key (e.g., post quantum private key) in the gateway 186 (e.g., quantum edge computing entity 106 thereof) to generate encrypted data/message and transmit via the communication channel to the ground control system 184. The ground control system 184 may be configured, via the quantum service computing entity 108, to access the PQC keys to decrypt the data that is received over the communication channel.

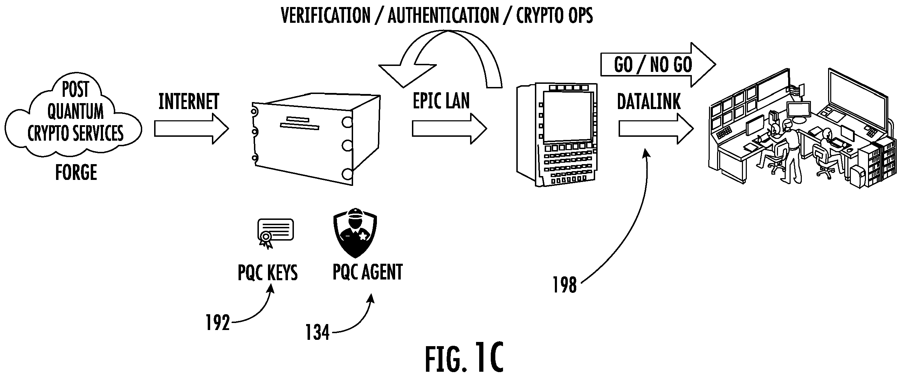

FIG. 1C provides an example secure communication process flow for the example connected ecosystem of FIG 1B. As shown in FIG. 1C the forge system provides PQC keys and cryptographic services. The PQC agent acts as an on-premises policy agent in the gateway. The FMS queries the on-premises policy agent for authorization and authentication. Based upon the response, CMF enables or disables communication.

### Example Apparatuses of the Disclosure

Having discussed example systems in accordance with the present disclosure, example apparatuses in accordance with the present disclosure will now be described.

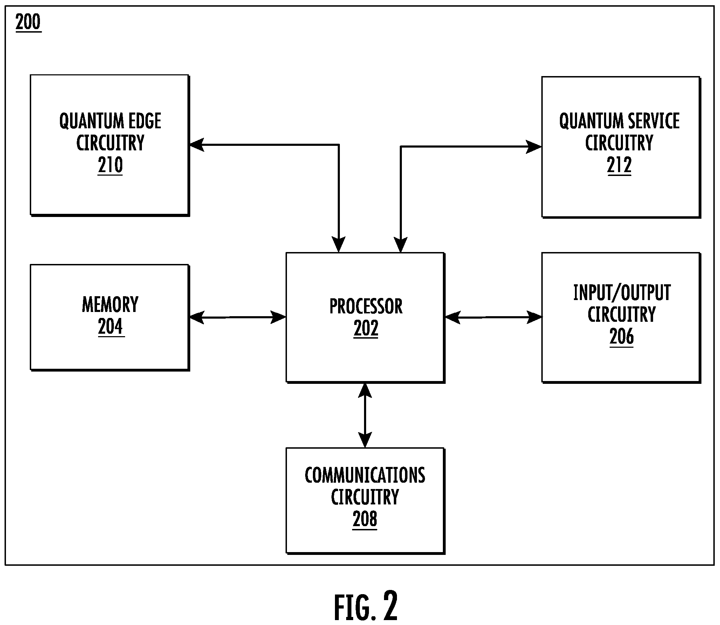

FIG. 2 illustrates a block diagram of an apparatus 200 in accordance with some example embodiments. For example, in some embodiments, computing system 101 (or one or more portions thereof), if embodied in a particular embodiment, may be embodied by one or more apparatuses 200. It should be noted, however, that the components, or elements illustrated in and described with respect to FIG. 2 below may not be mandatory and thus one or more may be omitted in certain embodiments. Additionally, some embodiments, may include further or different components or elements beyond those illustrated in and described with respect to FIG. 2. In some embodiments, the functionality of the computing system 101 or any subset thereof may be performed by a single apparatus 200 or multiple apparatuses 200. In some embodiments, the apparatus 200 may comprise one or a plurality of physical devices.

The apparatus 200 may include processor 202, memory 204, input/output circuitry 206, communications circuitry 208, quantum edge circuitry 210, and/or quantum service circuitry 212. The apparatus 200 may be configured to execute the operations described herein. Although these components 202-212 are described with respect to functional limitations, it should be understood that the particular implementations necessarily include the use of particular hardware. It should also be understood that certain of these components 202-212 may include similar or common hardware. For example, two sets of circuitries may both leverage use of the same processor, network interface, storage medium, or the like to perform their associated functions, such that duplicate hardware is not required for each set of circuitries.

In some embodiments, the processor 202 (and/or co-processor or any other processing circuitry assisting or otherwise associated with the processor) may be in communication with the memory 204 via a bus for passing information among components of the apparatus. The memory 204 is non-transitory and may include, for example, one or more volatile and/or non-volatile memories. In other words, for example, the memory 204 may be an electronic storage device (e.g., a computer-readable storage medium). The memory 204 may be configured to store information, data, content, applications, instructions, or the like for enabling the apparatus to carry out various functions in accordance with example embodiments of the present invention.

The processor 202 may be embodied in a number of different ways and may, for example, include one or more processing devices configured to perform independently. In some preferred and non-limiting embodiments, the processor 202 may include one or more processors configured in tandem via a bus to enable independent execution of instructions, pipelining, and/or multithreading. The use of the term "processing circuitry" may be understood to include a single core processor, a multi-core processor, multiple processors internal to the apparatus, and/or remote or "cloud" processors.

In some preferred and non-limiting embodiments, the processor 202 may be configured to execute instructions stored in the memory 204 or otherwise accessible to the processor 202. In some preferred and non-limiting embodiments, the processor 202 may be configured to execute hard-coded functionalities. As such, whether configured by hardware or software methods, or by a combination thereof, the processor 202 may represent an entity (e.g., physically embodied in circuitry) capable of performing operations according to an embodiment of the present invention while configured accordingly. Alternatively, as another example, when the processor 202 is embodied as an executor of software instructions, the instructions may specifically configure the processor 202 to perform the algorithms and/or operations described herein when the instructions are executed.

In some embodiments, the apparatus 200 may include input/output circuitry 206 that may, in turn, be in communication with processor 202 to provide output to the user and, in some embodiments, to receive an indication of a user input. The input/output circuitry 206 may comprise a user interface and may include a display, and may comprise a web user interface, a mobile application, a query-initiating computing device, a kiosk, or the like. In some embodiments, the input/output circuitry 206 may also include a keyboard, a mouse, a joystick, a touch screen, touch areas, soft keys, a microphone, a speaker, or other input/output mechanisms. The processor and/or user interface circuitry comprising the processor may be configured to control one or more functions of one or more user interface elements through computer program instructions (e.g., software and/or firmware) stored on a memory accessible to the processor (e.g., memory 204, and/or the like).

The communications circuitry 208 may be any means such as a device or circuitry embodied in either hardware or a combination of hardware and software that is configured to receive and/or transmit data from/to a network and/or any other device, circuitry, or module in communication with the apparatus 200. In this regard, the communications circuitry 208 may include, for example, a network interface for enabling communications with a wired or wireless communication network. For example, the communications circuitry 208 may include one or more network interface cards, antennae, buses, switches, routers, modems, and supporting hardware and/or software, or any other device suitable for enabling communications via a network. Additionally, or alternatively, the communications circuitry 208 may include the circuitry for interacting with the antenna/antennae to cause transmission of signals via the antenna/antennae or to handle receipt of signals received via the antenna/antennae.

In some embodiments, the apparatus 200 includes a quantum edge circuitry 210. The quantum edge circuitry 210 may include hardware components, software components, and/or a combination thereof configured to, with the processor 202, memory 204, input/output circuitry 206 and/or communications circuitry 208, perform one or more functions associated with a quantum edge computing entity 106 (as described above with reference to FIG. 1A). In some embodiments, the quantum edge circuitry 210 may be configured to receive and/or transmit data, objects, and/or the like from and/or to one or more components of the apparatus 200, through, for example, the use of applications or APIs executed using a processor, such as the processor 202. It should also be appreciated that, in some embodiments, the quantum edge circuitry 210 may include a separate processor, specially configured field programmable gate array (FPGA), or application specific interface circuit (ASIC) to provide or otherwise facilitate access to such data, objects, and/or the like used by one or more other components of the apparatus 200. The quantum edge circuitry 210 may also provide for communication with other components of the apparatus, system and/or external systems via a network interface provided by the communications circuitry 208.

In some embodiments, the apparatus 200 includes a quantum service circuitry 212. The feature quantum service circuitry 212 may include hardware components, software components, and/or a combination thereof configured to, with the processor 202, memory 204, input/output circuitry 206 and/or communications circuitry 208, perform one or more functions associated with a quantum service computing entity 108 (as described above with reference to FIG. 1A). In some embodiments, the quantum service circuitry 212 may be configured to receive and/or transmit data, objects, and/or the like from and/or to one or more components of the apparatus 200, through, for example, the use of applications or APIs executed using a processor, such as the processor 202. It should also be appreciated that, in some embodiments, the quantum service circuitry 212 may include a separate processor, specially configured field programmable gate array (FPGA), or application specific interface circuit (ASIC) to provide or otherwise facilitate access to such data, objects, and/or the like used by one or more other components of the apparatus 200. The quantum service circuitry 212 may also provide for communication with other components of the apparatus, system and/or external systems via a network interface provided by the communications circuitry 208.

Additionally or alternatively, in some embodiments, two or more of the sets of circuitries embodying processor 202, memory 204, input/output circuitry 206, communications circuitry 208, quantum edge circuitry 210, and/or quantum service circuitry 212. Alternatively or additionally, in some embodiments, one or more of the sets of circuitry perform some or all of the functionality described associated with another component. For example, in some embodiments, two or more of the sets of circuitry embodied by processor 202, memory 204, input/output circuitry 206, and communications circuitry 208, quantum edge circuitry 210, and/or quantum service circuitry 212 are combined into a single module embodied in hardware, software, firmware, and/or a combination thereof. Similarly, in some embodiments, one or more of the sets of circuitry, for example, quantum edge circuitry 210 and/or quantum service circuitry 212, is/are combined with the processor 202, such that the processor 202 performs one or more of the operations described above with respect to each of these sets of circuitry embodied by the quantum edge circuitry 210, and/or quantum service circuitry 212.

It is also noted that all or some of the information discussed herein can be based on data that is received, generated and/or maintained by one or more components of apparatus 200. In some embodiments, one or more external systems (such as a remote cloud computing and/or data storage system) may also be leveraged to provide at least some of the functionality discussed herein.

### Example Client Computing Entity

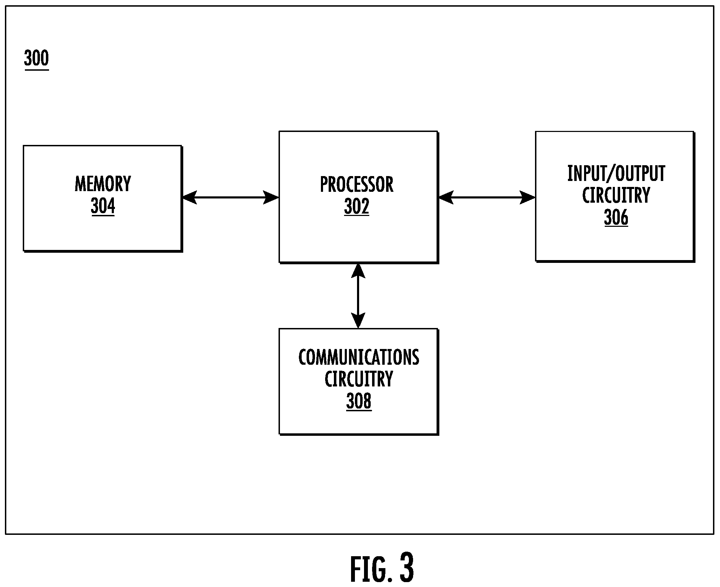

Referring now to FIG. 3, a client computing entity may be embodied by one or more computing systems, such as apparatus 300 shown in FIG. 3. The depiction of the apparatus 300 is not intended to limit or otherwise confine the embodiments described and contemplated herein to any particular configuration of elements, circuitries, or systems, nor is it intended to exclude any alternative configurations, circuitries, or systems. Rather, FIG. 3 and the apparatus 300 disclosed therein is merely presented to provide an example basis and context for the facilitation of some of the features, aspects, and techniques disclosed herein.

The apparatus 300 may include processor 302, memory 304, input/output circuitry 306, and a communications circuitry 308. Although these components 302-308 are described with respect to functional limitations, it should be understood that the particular implementations necessarily include the use of particular hardware. It should also be understood that certain of these components 302-308 may include similar or common hardware. For example, two sets of circuitries may both leverage use of the same processor, network interface, storage medium, or the like to perform their associated functions, such that duplicate hardware is not required for each set of circuitries.

In some embodiments, the processor 302 (and/or co-processor or any other processing circuitry assisting or otherwise associated with the processor) may be in communication with the memory 304 via a bus for passing information among components of the apparatus. The memory 304 is non-transitory and may include, for example, one or more volatile and/or non-volatile memories. In other words, for example, the memory 304 may be an electronic storage device (e.g., a computer-readable storage medium). The memory 304 may include one or more databases. Furthermore, the memory 304 may be configured to store information, data, content, applications, instructions, or the like for enabling the apparatus 300 to carry out various functions in accordance with example embodiments of the present invention.

The processor 302 may be embodied in a number of different ways and may, for example, include one or more processing devices configured to perform independently. In some preferred and non-limiting embodiments, the processor 302 may include one or more processors configured in tandem via a bus to enable independent execution of instructions, pipelining, and/or multithreading. The use of the term "processing circuitry" may be understood to include a single core processor, a multi-core processor, multiple processors internal to the apparatus, and/or remote or "cloud" processors.

In some preferred and non-limiting embodiments, the processor 302 may be configured to execute instructions stored in the memory 304 or otherwise accessible to the processor 302. In some preferred and non-limiting embodiments, the processor 302 may be configured to execute hard-coded functionalities. As such, whether configured by hardware or software methods, or by a combination thereof, the processor 302 may represent an entity (e.g., physically embodied in circuitry) capable of performing operations according to an embodiment of the present invention while configured accordingly. Alternatively, as another example, when the processor 302 is embodied as an executor of software instructions (e.g., computer program instructions), the instructions may specifically configure the processor 302 to perform the algorithms and/or operations described herein when the instructions are executed.

In some embodiments, the apparatus 300 may include input/output circuitry 306 that may, in turn, be in communication with processor 302 to provide output to the user and, in some embodiments, to receive an indication of a user input. The input/output circuitry 306 may comprise a user interface and may include a display, and may comprise a web user interface, a mobile application, a query-initiating computing device, a kiosk, or the like.

In embodiments in which the apparatus 300 is embodied by a limited interaction device, the input/output circuitry 306 includes a touch screen and does not include, or at least does not operatively engage (i.e., when configured in a tablet mode), other input accessories such as tactile keyboards, track pads, mice, etc. In other embodiments in which the apparatus is embodied by a non-limited interaction device, the input/output circuitry 306 may include at least one of a tactile keyboard (e.g., also referred to herein as keypad), a mouse, a joystick, a touch screen, touch areas, soft keys, and other input/output mechanisms. The processor and/or user interface circuitry comprising the processor may be configured to control one or more functions of one or more user interface elements through computer program instructions (e.g., software and/or firmware) stored on a memory accessible to the processor (e.g., memory 304, and/or the like).

The communications circuitry 308 may be any means such as a device or circuitry embodied in either hardware or a combination of hardware and software that is configured to receive and/or transmit data from/to a network and/or any other device, circuitry, or module in communication with the apparatus 300. In this regard, the communications circuitry 308 may include, for example, a network interface for enabling communications with a wired or wireless communication network. For example, the communications circuitry 308 may include one or more network interface cards, antennae, buses, switches, routers, modems, and supporting hardware and/or software, or any other device suitable for enabling communications via a network. Additionally, or alternatively, the communications circuitry 308 may include the circuitry for interacting with the antenna/antennae to cause transmission of signals via the antenna/antennae or to handle receipt of signals received via the antenna/antennae.

It is also noted that all or some of the information discussed herein can be based on data that is received, generated and/or maintained by one or more components of apparatus 300. In some embodiments, one or more external systems (such as a remote cloud computing and/or data storage system) may also be leveraged to provide at least some of the functionality discussed herein.

### EXAMPLE SYSTEM OPERATIONS

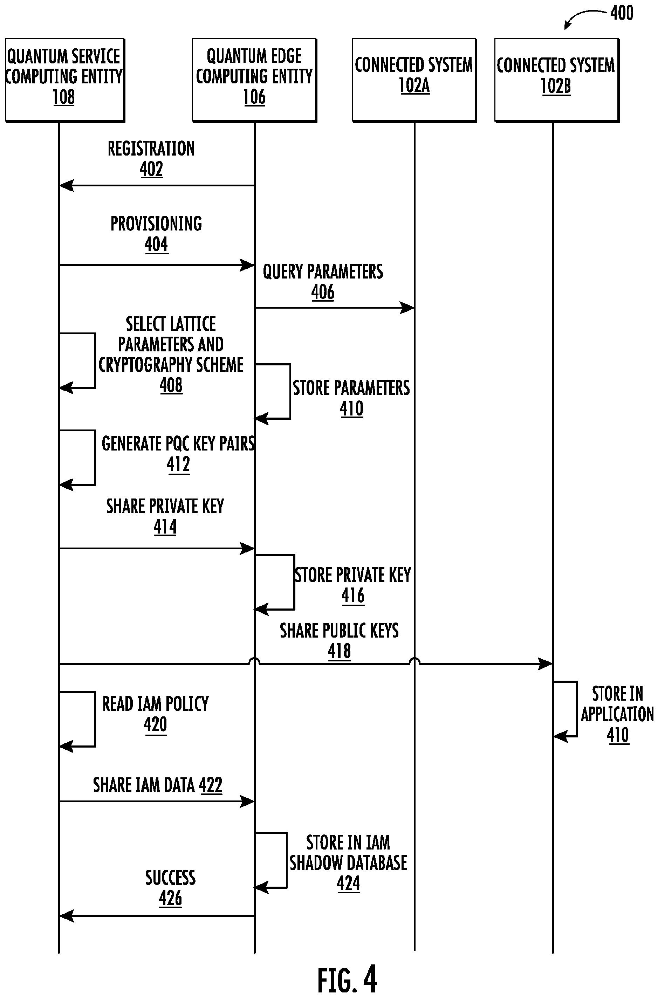

FIG. 4 illustrates a signal diagram of a registering process in accordance with at least some embodiments of the present disclosure. Specifically, FIG. 4 illustrates a signal diagram 400 of registration process for a connected system 102A and/or quantum edge gateway computing entity 106 associated with the connected system. As described above, embodiments of the present disclosure leverage post quantum principles to provide secure communication between connected systems 102 such as, for example, between aircraft systems and ground systems. In some embodiments, lattice-based post quantum cryptographic techniques, such as key encapsulation methodology (e.g., KEM) based post quantum cryptography is leveraged to secure the communication channel and/or communication system leveraged for the connected systems 102.

In some embodiments, as shown in Figure 2, the quantum edge computing entity 106 registers 402 the connected system 102A and/or quantum edge computing entity 106 with the quantum service computing entity 108. For example, the quantum edge computing entity 108 may send a registration request to the quantum service computing entity 108. In response, the quantum service computing entity 108 performs registration 402 and/or provisioning 404 for the connected system 102A and/or quantum edge computing entity 106. The quantum edge computing entity 106 may send a parameter query request 406 to the connected system 102A and store the parameters received from the connected system 102A. In aviation domain, example parameters may include tail number of the aircraft, current route for the aircraft, trip identification, pilot information, CDLC parameters, or the like.

The quantum service computing entity 108, using a specially-configured algorithm, may select lattice parameters and cryptography scheme 408. In some embodiments, the lattice parameters may include, but not limited to lattice structure, dimension, modulus, standard deviation of noise. For example, the lattice parameters may comprise L,n,m,q,σ (Lattice, dimension, modulus, standard deviation of noise. In some embodiments, the cryptography scheme comprise a lattice-based cryptography scheme such as learning with Errors (LWE), ring learning with errors (RLWE) problem, or the like.

The quantum service computing entity 108, using a specially-configured algorithm, generates PQC public-private key pairs 412. For example, the quantum service computing entity 108 may compute a lattice basis (e.g., B←GenBasis(L,n)) and generate the PQC public-private key pairs based on the lattice basis. For example, the PQC public-private key pair may comprise a private key based on s←SampleShort(B, *σ*) and a public key based on A←s.B+e, where e may represent a noise term. In some embodiments, where the lattice-based cryptography scheme is a RLWE scheme, the private key may be a short vector in the lattice, and the public key may be derived from the private key.

The quantum service computing entity 108 provides 414 the private key to the quantum edge computing entity 106. The quantum edge computing entity 106 stores the private key 416 for use when a communication session is initiated by the connected system 102A. The quantum service computing entity 108 shares 418 the public key with the connected system 102B. The connected system 102B stores the public key in an application, for example. The quantum service computing entity 108 reads 420 the IAM policy and shares 422 the IAM data with the quantum edge computing entity 106. The quantum edge computing entity 106 may store 424 the IAM data in the IAM shadow database and send a registration success message 426 to the quantum service computing entity 108.

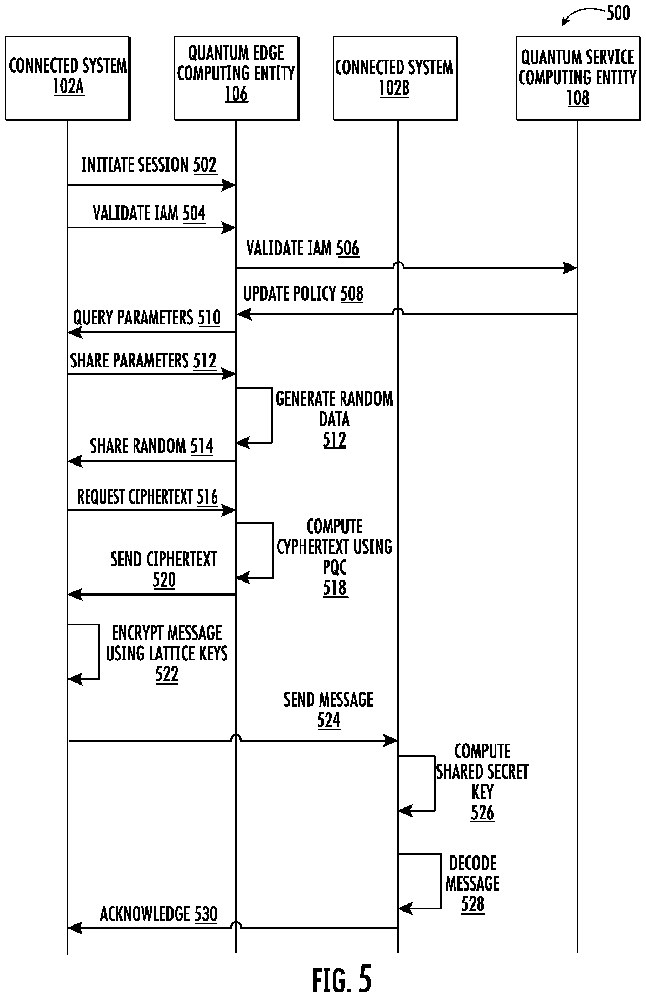

FIG. 5 illustrates a signal diagram 500 for providing secure communication in accordance with at least some embodiments of the present disclosure. Specifically, FIG. 5 illustrates a signal diagram 500 providing secure communication based on encapsulating/encrypting a message using post quantum cryptography keys and lattice-based techniques such as key encapsulation methodology.

In some embodiments, the connected system 102A initiates 502 a communication session. The quantum edge computing entity 106 may receive a communication session indication indicating the communication session associated with connected system 102A. For example, the connected system 102A may transmit signals, data, or the like to the quantum edge computing entity 106 indicative of a request to initiate a communication session. In some embodiments, the IAM policy associated with the connected system 102A is validated with the quantum service computing entity 108 via the quantum edge computing entity 106. For example, the connected system 102A may transmit signals, data, or the like to the quantum edge computing entity 106 indicative of IAM validation request 504. In response the quantum edge computing entity 106 may communicate with the quantum service computing entity 108 to validate the IAM policy. For example, the quantum edge computing entity 106 may send 506 the validation request to the quantum service computing entity 108. The quantum service computing entity 108 may update 508 the IAM policy.

In some embodiments, subsequent to validating the IAM policy, the quantum edge computing entity 106 sends a parameter request 510 to the connected system 102A. For example, the quantum edge computing entity 106 may query the connected system 102A for parameters that may be used for key encryption. In some embodiments, the connected system 102 may provide one or more parameters to the quantum edge computing entity 106. In aviation domain, example parameters may include tail number of the aircraft, current route for the aircraft, trip identification, pilot information, CDLC parameters, or the like.

In some embodiments, in response to receiving the one or more parameters, the quantum edge computing entity 106 generates random data 512 (e.g., comprising random values) and provides the random data to the connected system 102A. In some embodiments, generating the random data comprises selectin a random noise vector (e.g., r← SampleUniform(L,m,q)). In some embodiments, the random data may be configured to create errors in a lattice-based encryption.

In some embodiments, the connected system 102A sends a ciphertext request 516 to the quantum edge computing entity 106. In some embodiments, the quantum edge computing entity 106, using a specially-configured algorithm, computes 518 a ciphertext using post quantum cryptography and sends the ciphertext 520 to the connected system 102A. The ciphertext may encapsulate a shared secret key (e.g., private key) using the public key. In some embodiments, the quantum edge computing entity 106 computes the ciphertext by combining the public key and random data. For example, the ciphertext may comprise a perturbed version of the public key, with the random data serving as noise. The encrypted message may then be sent 524 to the recipient connected system 102 via the communication channel. The special-configured algorithm for computing the ciphertext, for example, may comprise computing the public key perturbed by noise (e.g., u←A+r) and computing the ciphertext (e.g., c←u.B+m.G) based on the public key perturbed by noise, where G is a generator matrix.

In certain embodiments, the connected system 102A (e.g., with support from the quantum edge computing entity 106) encrypts/encode the message to be transmitted using the lattice-based PQC public-private keys and sends the message via the communication channel to the connected system 102B. For example, the message may be encoded into a lattice point using a specially-configured algorithm which may include mapping the bits of the message into the lattice points using a selected encoding technique.

In some embodiments, the recipient connected system 102B computes 526 the shared secret key and decodes 528 the message. In some embodiments, the recipient connected system 102B may use the private key and ciphertext to compute the shared secret. For example, the recipient connected system 102B may use lattice-based techniques to filter out the noise introduced during encryption/encoding of the message, as described above. The lattice structure may be configured to ensure that even with the added noise, the shared secret can be effectively recovered. The shared secret may then be extracted from the lattice point to decode the message. In some embodiments, decoding the message may include mapping lattice points back to the original shared secret/message.

In some embodiments, the connected system 102B may transmit signals, data, or the like to the connected system 102A via the communication channel indicative of acknowledgment 530 of receipt of the message.

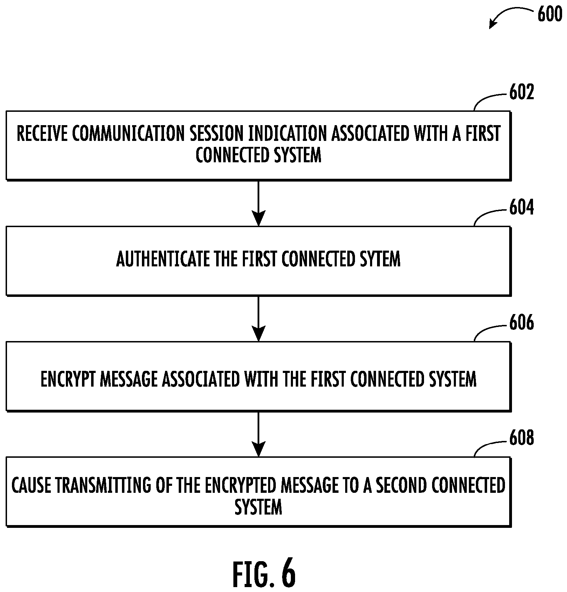

FIG. 6 is a flowchart diagram of an example process 600 for providing secure communication in accordance with at least some embodiments of the present disclosure. FIG. 6 illustrates an example process 600 for explanatory purposes. Although the example process 600 depicts a particular sequence of steps/operations, the sequence may be altered without departing from the scope of the present disclosure. For example, some of the steps/operations depicted may be performed in parallel or in a different sequence that does not materially impact the function of the process 600. In other examples, different components of an example device or system that implements the process 600 may perform functions at substantially the same time or in a specific sequence.

In some embodiments, the process includes at step/operation 602, receiving a communication session indication associated with a first connected system. For example, the computing system 101 (e.g., via the quantum edge computing entity 106 thereof) may receive a communication session indication associated with first connected system.

In some embodiments, the process includes at step/operation 604, authenticating the first connected system. For example, the computing system 101 (e.g., via the quantum edge computing entity 106 thereof) may authenticate the first connected system based on IAM policy.

In some embodiments, the process 600 includes at step/operation 606, encrypting a message associated with the first connected system. For example, the computing system 101 (e.g., via the quantum edge computing entity 106 thereof) may authenticate a message associated with the first connected system to generate an encrypted message based on a post quantum cryptography public key associated with the first connected system.

In some embodiments, the computing system 101 (e.g., via the quantum service computing entity 108) may be configured to generate the post quantum cryptography public key. For example, the computing system 101 (e.g., via the quantum service computing entity 108) may be configured to generate a post quantum cryptography public-private key pair comprising the post quantum cryptography public key and a post quantum cryptography private key. In some embodiments, the computing system 101 (e.g., via the quantum service computing entity 108) may generate the post quantum cryptography public-private key pair during registration of the first connected system. For example, the post quantum cryptography public-private key pair may comprise initial post quantum cryptography public-private key pair for the first connected system. In some embodiments, the post quantum cryptography public-private key pair may be an updated/reworked post quantum cryptography public-private key pair.

In some embodiments, the post quantum cryptography public-private key pair is generated using key encapsulation methodology (as described above). In some embodiments, the encrypted comprises a ciphertext. For example, the ciphertext may be generated using key encapsulation methodology based on the message to be transmitted and the post quantum cryptography public key of the post quantum cryptography public-private key pair. In some embodiments, one or more of the post quantum cryptography public key or post quantum cryptography private key is stored in a key store (e.g., secure key store 148 hosted by the quantum edge computing entity 106). In some embodiments one or more of the one or more of the post quantum cryptography public key or post quantum cryptography private key is shared with a second connected system.

In some embodiments, the process includes at step/operation 608, causing transmitting of the encrypted message to a second connected system. For example, the computing system 101 (e.g., via the quantum edge computing entity 106 thereof) may cause the encrypted message to be a transmitted to a second connected system via a communication channel. In some embodiments, the communication channel may be an unsecure communication channel. In some embodiments, the encrypted message is configured to be decrypted using the post quantum cryptography private key of the post quantum cryptography public-private key pair. In some embodiments, the computing system 101 (e.g., via the quantum service computing entity 108) provides the post quantum cryptography private key to the second connected system to facilitate decryption of the encrypted message. In some embodiments, the first connected system is associated with a flight management system onboard an aircraft and the second connected system is associated with an air traffic control system.

### Conclusion

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer-implemented method for providing secure communication for connected systems, the computer-implemented method comprising:
receiving a communication session indication associated with a first connected system;
authenticating the first connected system based on IAM policy;
encrypting a message to generate an encrypted message based on a post quantum cryptography public key associated with the first connected system; and
causing transmitting of the encrypted message to a second connected system.

2. The computer-implemented method of claim 1, further comprising:
generating a post quantum cryptography public-private key pair comprising the post quantum cryptography public key and a post quantum cryptography private key.

3. The computer-implemented method of claim 2, further comprising:
providing the post quantum cryptography private key to the second connected system to facilitate decryption of the encrypted message.

4. The computer-implemented method of claim 2, wherein the post quantum cryptography public-private key pair is generated using key encapsulation methodology.

5. The computer-implemented method of claim 2, wherein the post quantum cryptography public-private key pair is generated via a cloud-based quantum service computing entity.

6. The computer-implemented method of claim 5, further comprising:
storing one or more of the post quantum cryptography public key or the post quantum cryptography private key in a key store.

7. The computer-implemented method of claim 6, wherein the key store is hosted by a quantum edge computing entity associated with a gateway network entity, wherein the quantum edge computing entity is communicatively coupled to the cloud-based quantum service computing entity.

8. The computer-implemented method of claim 1, wherein the encrypted message comprises a ciphertext.

9. The computer-implemented method of claim 1, wherein the first connected system is associated with a flight management system onboard an aircraft and the second connected system is associated with an air traffic control system.

10. A computing system for providing secure communication for connected systems, the computing system comprising memory and one or more processors communicatively coupled to the memory, the one or more processors configured to:
receive a communication session indication associated with a first connected system;
authenticate the first connected system based on IAM policy;
encrypt a message to generate an encrypted message based on a post quantum cryptography public key associated with the first connected system; and
cause the encrypted message to be transmitted to a second connected system.

11. The computing system of claim 10, wherein the one or more processors are further configured to:
generate a post quantum cryptography public-private key pair comprising the post quantum cryptography public key and a post quantum cryptography private key.

12. The computing system of claim 11, wherein the one or more processors are further configured to:
provide the post quantum cryptography private key to the second connected system to facilitate decryption of the encrypted message.

13. The computing system of claim 11, wherein the post quantum cryptography public-private key pair is generated using key encapsulation methodology.

14. The computing system of claim 11, wherein the post quantum cryptography public-private key pair is generated via a cloud-based quantum service computing entity.

15. One or more non-transitory computer-readable storage media for providing secure communication for connected systems, the one or more non-transitory computer-readable storage media including instructions that, when executed by one or more processors, cause the one or more processors to:
receive a communication session indication associated with a first connected system;
authenticate the first connected system based on IAM policy;
encrypt a message to generate an encrypted message based on a post quantum cryptography public key associated with the first connected system; and
cause the encrypted message to be transmitted to a second connected system.
